# EUROPÄISCHE PATENTSCHRIFT

(11) **EP 1 452 466 B1**
(45) Veröffentlichungstag und Bekanntmachung des Hinweises auf die Patenterteilung: **18.05.2005**
(21) Anmeldenummer: 03450235.1
(22) Anmeldetag: 23.10.2003
(51) Int. Cl.: B65G 21/04

(54) **Förderanlage zum Transport von Gütern**
A device for conveying products
Dispositif de transport pour produits

(30) Priorität: 27.02.2003 AT 2862003
(43) Veröffentlichungstag der Anmeldung: 01.09.2004
(73) Patentinhaber: Innova Patent GmbH, 6960 Wolfurt (AT)
(72) Erfinder: Trieb, Herbert, 6922 Wolfurt (AT)
(74) Vertreter: Atzwanger, Richard, Dipl.-Ing.

(56) Entgegenhaltungen:
- EP-A- 0 375 667
- DE-C- 3 504 995
- GB-A- 665 886
- GB-A- 930 140
- US-A1- 2003 051 981

## Beschreibung

Die gegenständliche Erfindung betrifft eine Förderanlage zum Transport von Gütern mit einem Förderband, an welchem quer zu dessen Bewegungsrichtung ausgerichtete Tragbalken befestigt sind und mit zwei in vertikalem Abstand voneinander angeordneten, durch jeweils zwei Tragseile gebildeten Tragbahnen, längs welcher an den seitlichen Enden der Tragbalken angeordnete Laufrollen verfahrbar sind.

Es sind Förderanlagen bekannt, welche zwei übereinander angeordnete Paare von Tragseilen und ein längs der Tragseile bewegbares Förderband aufweisen. Dabei ist das Förderband mit quer zu dessen Bewegungsrichtung ausgerichteten Tragbalken ausgebildet, an deren freien Enden Laufrollen gelagert sind, welche längs der Tragseile abrollen. Um die Windstabilität von derartigen Förderanlagen zu verbessern, ist es weiters vorgeschlagen worden, die Tragseile mittels Rahmen miteinander zu verbinden. Innerhalb dieser Halterahmen befindet sich das in sich geschlossene Förderband, dessen oberes Trum dem oberen Paar der beiden Tragseile zugeordnet ist und dessen unteres Trum dem unteren Paar der beiden Tragseile zugeordnet ist.

Weiters ist es vorgeschlagen worden, eine derartige Förderanlage im Bereich ihrer beiden Enden mit Wendeeinrichtungen auszubilden, durch welche die Ladeseite des Förderbandes nach der Entladestation nach oben gewendet wird und vor der Beladestation wieder zurückgewendet wird. Hierdurch wird verhindert, dass nach der Entladestation am Förderband verbliebenes Ladegut vom unteren Trum des Förderbandes abfallen kann, weswegen aus Gründen des Umweltschutzes und der Sicherheit zusätzliche Maßnahmen, wie die Anordnung von Gehäusen oder Abdeckungen, vorgenommen werden müssen.

Da sich bei derartigen Förderanlagen das Fördergut oberhalb des oberen Paares der Tragseile befindet, weisen diese, obgleich die beiden Paare der Tragseile miteinander mittels Halterahmen verbunden sind, eine nur geringe Stabilität gegenüber Windkräften auf, weswegen insbesondere bei großen Spannweiten die Gefahr besteht, dass die gesamte Förderanlage umkippt, wodurch schwerwiegende Betriebsstörungen bedingt werden. Der gegenständlichen Erfindung liegt somit die Aufgabe zugrunde, eine Förderanlage zu schaffen, welcher eine wesentlich verbesserte Stabilität gegenüber Windkräften zukommt.

Dies wird erfindungsgemäß dadurch erzielt, dass die Tragseile durch im Abstand voneinander angeordnete Halterahmen, an welchen die Tragseile für die Laufrollen befestigt sind, miteinander verbunden sind und dass oberhalb des oberen Paares der Tragseile für die Laufrollen mindestens ein weiteres Tragseil vorgesehen ist, an welchem die Halterahmen gleichfalls befestigt sind.

Vorzugsweise ist oberhalb des oberen Paares der Tragseile für die Laufrollen ein weiteres Paar von Tragseilen vorgesehen. Weiters sind vorzugsweise die sich oberhalb des oberen Paares der Tragseile für die Laufrollen befindlichen Tragseile seitlich außerhalb des oberen Paares der Tragseile für die Laufrollen angeordnet. Durch diese beiden Maßnahmen wird die Windstabilität einer derartigen Förderanlage maßgeblich verbessert.
Nach einer weiteren bevorzugten Ausführungsform sind die Halterahmen mit Klemmen ausgebildet, mittels welcher die Halterahmen jeweils von unten her an den Tragseilen für die Laufrollen befestigt sind.

Vorzugsweise ist oberhalb des oberen Trumes des Förderbandes eine Abdeckung vorgesehen, welche sich insbesondere innerhalb der Halterahmen befindet. Durch eine derartige Abdeckung wird einerseits das Fördergut geschützt und wird andererseits verhindert, dass das Fördergut durch Windkräfte abgetragen wird. Zudem können die seitlichen Bereiche der Abdekkung, welche sich oberhalb der Wellkanten des oberen Trumes des Förderbandes befinden, für diese Wellkanten als Niederhalter dienen.

Nach einer weiteren Ausführungsform sind die Halterahmen in sich geschlossen. Alternativ dazu können die Halterahmen unterhalb des unteren Paares der Tragseile für die Laufrollen nicht in sich geschlossen sein und ist ein Montagegestell vorgesehen, welches an der Unterseite des Förderbandes befestigbar und mit diesem bewegbar ist.

Der Gegenstand der Erfindung ist nachstehend anhand eines in der Zeichnung dargestellten Ausführungsbeispieles näher erläutert. Es zeigen:
- Fig.1: eine erfindungsgemäße Förderanlage, in schematisierter axonometrischer Darstellung;
- Fig.2, Fig.2a: die Förderanlage gemäß Fig.1, in Vorderansicht und in Seitenansicht;
- Fig.3, Fig.3a: eine alternative Ausführungsform einer erfindungsgemäßen Förderanlage, in Vorderansicht und in Seitenansicht; sowie die
- Fig.4, Fig.4a: eine Befestigungseinrichtung, in Seitenansicht und im Schnitt nach der Linie IVa-IVa der Fig.4.

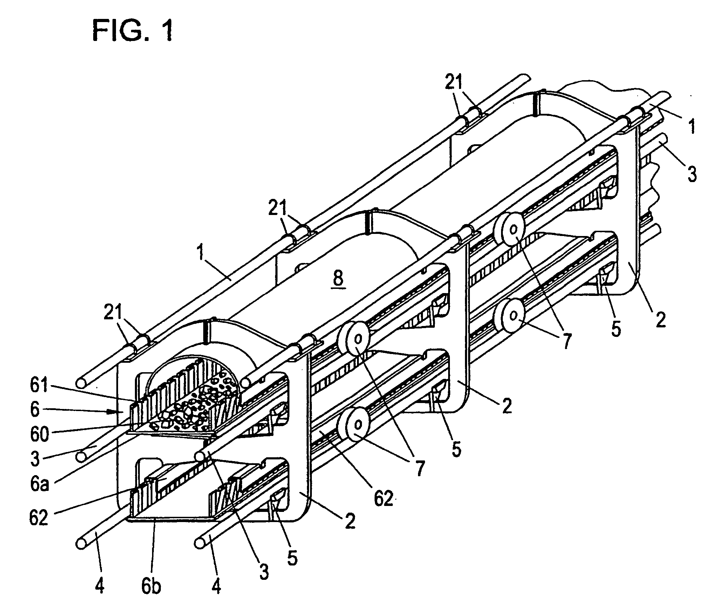

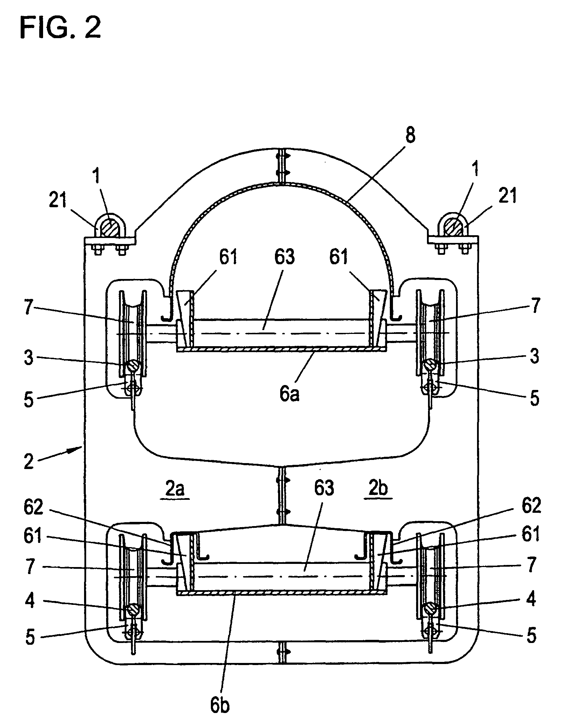

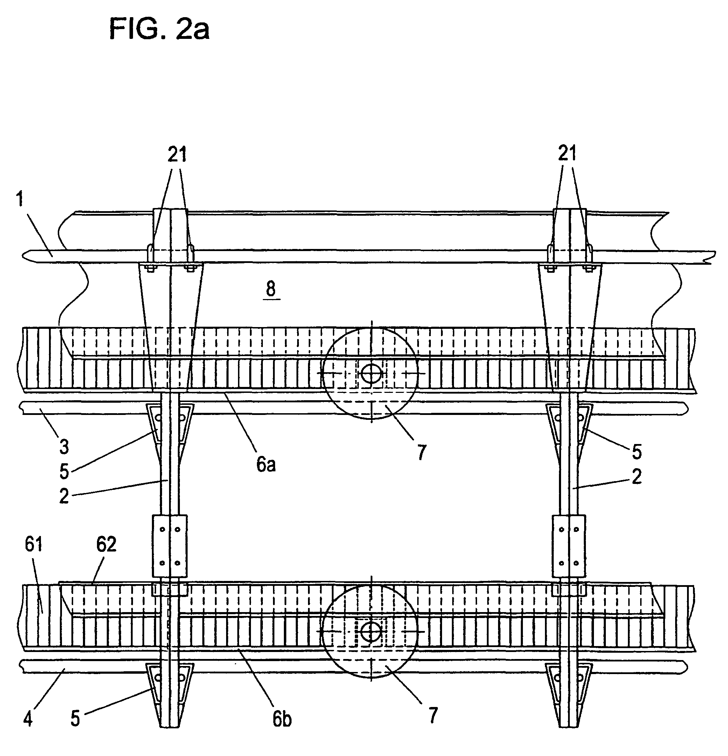

Wie dies aus Fig.1, Fig.2 und Fig.2a ersichtlich ist, weist eine erfindungsgemäße Förderanlage ein erstes Paar von Tragseilen 1 auf, an welchen mittels Tragösen 21 im Abstand voneinander angeordnete Halterahmen 2 befestigt sind. Innerhalb dieser Halterahmen 2, welche durch gestanzte Blechteile gebildet sind, befinden sich zwei weitere Paare von Tragseilen 3 und 4, welche mit den Halterahmen 2 mittels Klemmen 5 verbunden sind. Die Halterahmen 2 sind nur an den Tragseilen 1, 3 und 4 befestigt. Innerhalb der Halterahmen 2 befindet sich weiters ein in sich geschlossenes Förderband 6, welches mittels Tragrollen 7 längs der Tragseile 3 und 4 bewegbar ist. Dabei ist das obere Trum 6a des Förderbandes 6 mittels der Laufrollen 7 längs des oberen Paares der Tragseile 3 bewegbar und ist das untere Trum 6b des Förderbandes 6 längs des Paares der unteren Tragseile 4 bewegbar. Dem unteren Trum 6b des Förderbandes 6 ist in dessen Förderrrichtung nach der Entladestation eine Wendeeinrichtung zugeordnet, durch welches das untere Trum des Förderbandes 6 so gewendet wird, daß dessen Ladefläche nach oben gerichtet ist. Vor der Beladestation ist eine weitere Wendeeinrichtung vorgesehen, durch welche das untere Trum 6b wieder zurückgewendet wird. Hierdurch wird gewährleistet, dass nach der Entladestation am Förderband 6 verbliebenes Fördergut von diesem nicht abfallen kann. Das Förderband 6 ist mit Wellkanten 61 ausgebildet.

Weiters befindet sich innerhalb der Halterahmen 2 eine im Querschnitt halbkreisförmige Abdeckung 8, welche sich über die gesamte Länge der Förderanlage erstreckt. Durch diese Abdeckung 8 wird einerseits das am oberen Trum 6a des Förderbandes 6 befindliche Fördergut 60 geschützt und wird verhindert, dass es durch den Wind abgetragen wird. Die seitlichen Bereiche dieser Abdeckung 8 dienen weiters als Niederhalter für die Wellkanten 61. Den am unteren Trum 6b befindlichen Wellkanten 61 sind U-förmige Schienen 62 zugeordnet, welche gleichfalls als Niederhalter dienen.

Wie dies aus Fig.2 zudem ersichtlich ist, bestehen die Rahmen 2 aus jeweils zwei Platten 2a und 2b, welche aneinander durch Flansche starr befestigt sind. Weiters ist aus Fig.2 ersichtlich, dass das Förderband 6 mit quer zu dessen Bewegungsrichtung ausgerichteten Balken 63 ausgebildet ist, an deren freien Enden Laufrollen 7 gelagert sind. Zwischen den einzelnen Balken 63 befinden sich die Wellkanten 61.

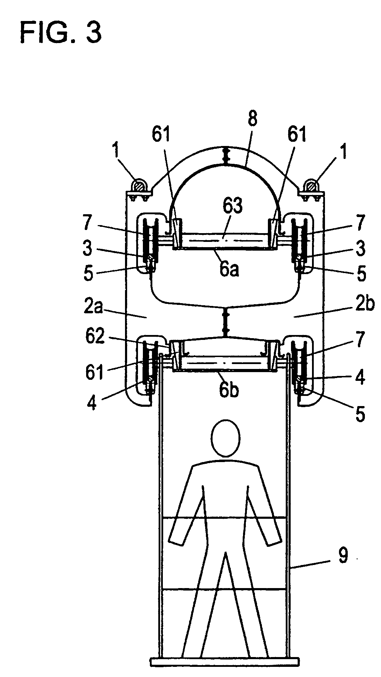

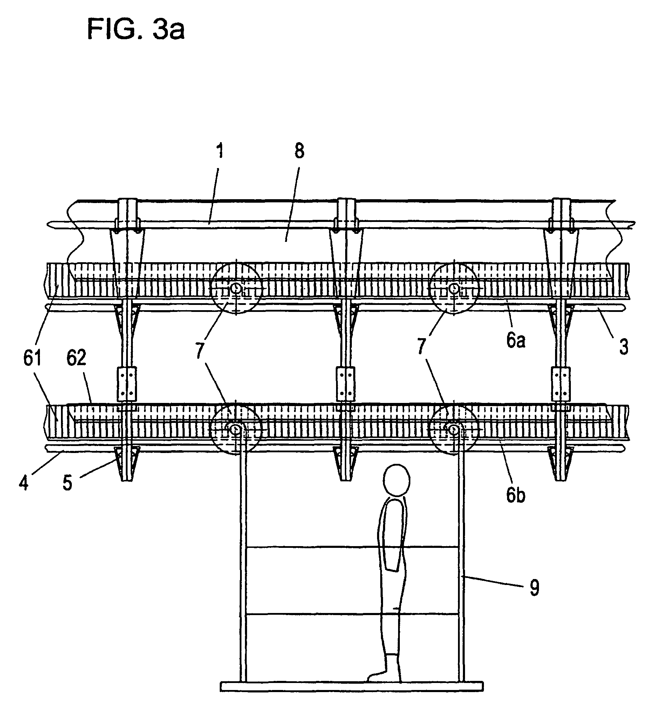

Anhand der Fig.3 und 3a ist eine Ausführungsvariante einer anmeldungsgemäßen Fördereinrichtung dargestellt. Dabei sind die Halterahmen 2 an ihrer Unterseite nicht geschlossen, sondern sind diese vielmehr mit einer Ausnehmung ausgebildet, wodurch an zwei aufeinanderfolgenden Balken 63 eine Plattform 9 befestigbar ist, welche zu Montagezwecken dient.

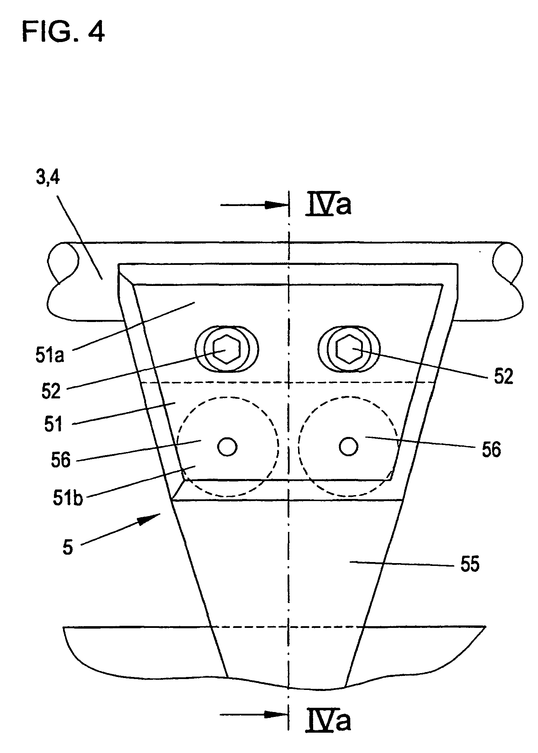

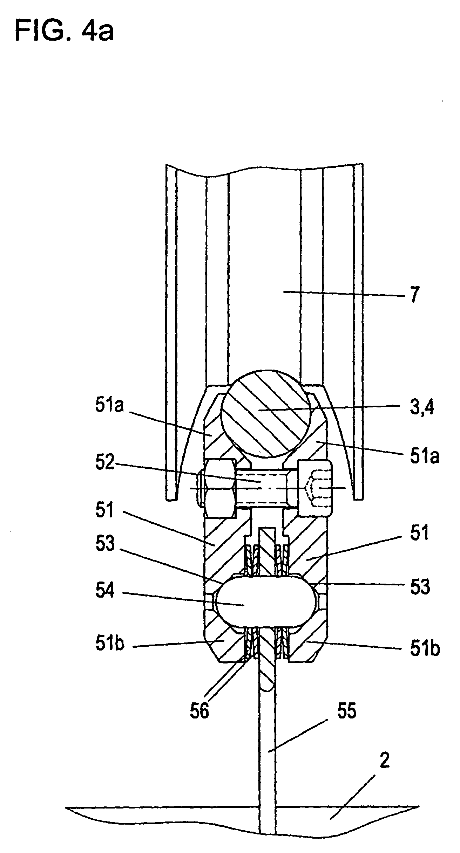

Nachstehend sind anhand der Fig.4 und 4a die Ausbildung und Funktion der Klemmen 5 erläutert. Die Klemmen 5 bestehen aus zwei Klemmbacken 51, deren obere Teile 51a an die Tragseile 3, 4 anliegen. Da jedoch auf den Tragseilen 3, 4 die Rollen 7 laufen, dürfen die Klemmbacken 51 nur an die Seitenflächen der Tragseile 3, 4 anliegen. Unterhalb der oberen Teile 51a der Klemmbacken 51 sind diese mittels eines Bolzens 52 derart verbunden, daß sie um eine in Richtung der Tragseile 3, 4 verlaufende Achse gegeneinander geringfügig verschwenkbar sind.

In ihrem unteren Bereich 51b sind in den Klemmbacken 51 Ausnehmungen 53 vorgesehen, welche an ihrer Unterseite mit kegeligen, gewölbten oder schrägen Flächen ausgebildet sind. In diesen Ausnehmungen 53 befinden sich Tragkörper 54, welche mit kugelförmigen Flächen ausgebildet sind und an welchen mit den Halterahmen 2 verbundene Traglaschen 55 befestigt sind. Zudem sind zwischen den Traglaschen 55 und den Klemmbacken 51 Tellerfedern 56 angeordnet, durch welche die oberen Teile 51a der Klemmbacken 51 an die Tragseile 3, 4 angepresst werden. Durch diese Tellerfedern 56 werden Änderungen im Durchmesser der Tragseile 3 und 4 aufgenommen.

Sobald durch den Halterahmen 2 über die Traglaschen 55 auf die Tragkörper 54 eine Zugkraft ausgeübt wird, werden die unteren Bereiche 51b der Klemmbacken 51 auseinander gespreizt, wodurch die durch die oberen Backenteile 51a auf die Tragseile 3, 4 ausgeübten Klemmkräfte erhöht werden. Hierdurch wird gewährleistet, daß bei einer verstärkten Belastung der Klemmen 5 durch die Halterahmen 2 ein Lösen der Klemmen 5 von den Tragseilen 3, 4 verhindert wird.

Da sich bei einer derartigen Anlage deren Schwerpunkt unterhalb des mindestens einen oberhalb der Tragseile für die Laufrollen vorgesehenen weiteren Tragseiles befindet, weist diese Förderanlage eine sehr große Lagestabilität auf, wodurch auch bei großen Windstärken keine Gefahr des Umkippens besteht. Zudem ist einerseits das Fördergut durch die durchgehende Abdeckung geschützt und wird andererseits verhindert, dass Fördergut durch Windkräfte abgetragen wird.

## Patentansprüche

1. Förderanlage zum Transport von Gütern (60) mit einem Förderband (6), an welchem quer zu dessen Bewegungsrichtung ausgerichtete Tragbalken (63) befestigt sind, und mit zwei in vertikalem Abstand voneinander angeordneten, durch jeweils zwei Tragseile (3, 4) gebildeten Tragbahnen, längs welcher an den seitlichen Enden der Tragbalken (63) angeordnete Laufrollen (7) verfahrbar sind, **dadurch gekennzeichnet, dass** die Tragseile (3, 4) durch im Abstand voneinander angeordnete Halterahmen (2), an welchen die Tragseile (3, 4) für die Laufrollen (7) befestigt sind, miteinander verbunden sind und dass oberhalb des oberen Paares der Tragseile (3) für die Laufrollen (7) mindestens ein weiteres Tragseil (1) vorgesehen ist, an welchem die Halterahmen (2) gleichfalls befestigt sind.

2. Förderanlage nach Patentanspruch 1, **dadurch gekennzeichnet, dass** oberhalb des oberen Paares der Tragseile (3) für die Laufrollen (7) ein weiteres Paar von Tragseilen (1) vorgesehen ist.

3. Förderanlage nach Patentanspruch 2, **dadurch gekennzeichnet, dass** die sich oberhalb des oberen Paares der Tragseile (3) für die Laufrollen (7) befindlichen Tragseile (1) seitlich außerhalb des oberen Paares der Tragseile (3) für die Laufrollen (7) angeordnet sind.

4. Förderanlage nach einem der Patentansprüche 1 bis 3, **dadurch gekennzeichnet, dass** die Halterahmen (2) mit Klemmen (5) ausgebildet sind, mittels welcher die Halterahmen (2) jeweils von unten her an den Tragseilen (3, 4) für die Laufrollen (7) befestigt sind.

5. Förderanlage nach einem der Patentansprüche 1 bis 4, **dadurch gekennzeichnet, dass** oberhalb des oberen Trumes (6a) des Förderbandes (6) eine Abdeckung (8) vorgesehen ist.

6. Förderanlage nach Patentanspruch 5, **dadurch gekennzeichnet, dass** die Abdeckung (8) innerhalb der Halterahmen (2) angeordnet ist.

7. Förderanlage nach Patentanspruch 6, **dadurch gekennzeichnet, dass** die seitlichen Bereiche der Abdeckung (8), welche sich oberhalb der Wellkanten (61) des oberen Trumes des Förderbandes (6) befinden, für diese Wellkanten (61) als Niederhalter dienen.

8. Förderanlage nach einem der Patentansprüche 1 bis 7, **dadurch gekennzeichnet, dass** die Halterahmen (2) unterhalb des unteren Paares der Tragseile (4) für die Laufrollen (7) in sich geschlossen sind.

9. Förderanlage nach einem der Patentansprüche 1 bis 8, **dadurch gekennzeichnet, dass** die Halterahmen (2) unterhalb des unteren Paares der Tragseile (4) für die Laufrollen (7) in sich nicht geschlossen sind und dass ein Montagegestell (9) vorgesehen ist, welches an der Unterseite des Förderbandes (6) befestigbar und mit diesem bewegbar ist.

## Claims

1. A conveyor system for transporting goods (60), having a conveyor belt (6), to which supporting beams (63) are attached which are oriented transversely with respect to its direction of movement, and having two supporting tracks arranged at a vertical distance from one another and each formed by two carrying cables (3, 4), along which tracks rollers (7) may be moved which are arranged at the lateral ends of the supporting beams (63), **characterised in that** the carrying cables (3, 4) are connected together by holding frames (2) spaced from one another and to which the carrying cables (3, 4) for the rollers (7) are attached and **in that** at least one further carrying cable (1) is provided above the upper pair of carrying cables (3) for the rollers (7), to which further carrying cable (1) the holding frames (2) are likewise attached.

2. A conveyor system according to claim 1, **characterised in that** a further pair of carrying cables (1) is provided above the upper pair of carrying cables (3) for the rollers (7).

3. A conveyor system according to claim 2, **characterised in that** the carrying cables (1) located above the upper pair of carrying cables (3) for the rollers (7) are arranged laterally to the outside of the upper pair of carrying cables (3) for the rollers (7).

4. A conveyor system according to any one of claims 1 to 3, **characterised in that** the holding frames (2) are provided with clamps (5), by means of which the holding frames (2) are each attached from below to the carrying cables (3, 4) for the rollers (7).

5. A conveyor system according to any one of claims 1 to 4, **characterised in that** a cover (8) is provided above the upper run (6a) of the conveyor belt (6).

6. A conveyor system according to claim 5, **characterised in that** the cover (8) is arranged within the holding frames (2).

7. A conveyor system according to claim 6, **characterised in that** the lateral areas of the cover (8), which are located above the corrugated sidewalls (61) of the upper run of the conveyor belt (6), serve as holding-down means for said corrugated sidewalls (61).

8. A conveyor system according to any one of claims 1 to 7, **characterised in that** the holding frames (2) are continuous beneath the lower pair of carrying cables (4) for the rollers (7).

9. A conveyor system according to any one of claims 1 to 8, **characterised in that** the holding frames (2) are discontinuous beneath the lower pair of carrying cables (4) for the rollers (7) and **in that** an installation cradle (9) is provided, which may be attached to the underside of the conveyor belt (6) and moved therewith.

## Revendications

1. Convoyeur pour le transport de produits (60), comprenant une bande transporteuse (6) à laquelle sont fixées des poutres (63) orientées transversalement par rapport au sens de déplacement, et deux voies porteuses qui sont espacées verticalement, qui sont formées chacune par deux câbles porteurs (3, 4) et le long desquelles des galets de roulement (7) disposés aux extrémités latérales des poutres (63) sont aptes à se déplacer, **caractérisé en ce que** les câbles porteurs (3, 4) sont reliés entre eux par des châssis (2) qui sont espacés les uns des autres et auxquels sont fixés les câbles porteurs (3, 4) pour les galets de roulement (7), et **en ce qu'**il est prévu, au-dessus de la paire supérieure de câbles porteurs (3) pour les galets de roulement (7), au moins un câble porteur supplémentaire (1) auquel sont également fixés les châssis (2).

2. Convoyeur selon la revendication 1, **caractérisé en ce qu'**il est prévu, au-dessus de la paire supérieure de câbles porteurs (3) pour les galets de roulement (7), une paire supplémentaire de câbles porteurs (1).

3. Convoyeur selon la revendication 2, **caractérisé en ce que** les câbles porteurs (1) qui se trouvent au-dessus de la paire supérieure de câbles porteurs (3) pour les galets de roulement (7) sont disposés en dehors, latéralement, de ladite paire supérieure de câbles porteurs (3) pour les galets de roulement (7).

4. Convoyeur selon l'une des revendications 1 à 3, **caractérisé en ce que** les châssis (2) sont pourvus de pinces (5) grâce auxquelles ils sont fixés par le bas aux câbles porteurs (3, 4) pour les galets de roulement (7).

5. Convoyeur selon l'une des revendications 1 à 4, **caractérisé en ce qu'**il est prévu un recouvrement (8) au-dessus du brin supérieur (6a) de la bande transporteuse (6).

6. Convoyeur selon la revendication 5, **caractérisé en ce que** le recouvrement (8) est disposé à l'intérieur des châssis (2).

7. Convoyeur selon la revendication 6, **caractérisé en ce que** les zones latérales du recouvrement (8) qui se trouvent au-dessus des bords ondulés (61) du brin supérieur de la bande transporteuse (6) servent d'abaisseurs pour ces bords ondulés (61).

8. Convoyeur selon l'une des revendications 1 à 7, **caractérisé en ce que** les châssis (2) sont fermés au-dessous de la paire inférieure de câbles porteurs (4) pour les galets de roulement (7).

9. Convoyeur selon l'une des revendications 1 à 8, **caractérisé en ce que** les châssis (2) ne sont pas fermés au-dessous de la paire inférieure de câbles porteurs (4) pour les galets de roulement (7), et **en ce qu'**il est prévu une structure de montage (9) qui est apte à être fixée au côté inférieur de la bande transporteuse (6) et à être déplacée avec celle-ci.
